(19) Europäisches Patentamt
European Patent Office
Office européen des brevets

(11) EP 4 768 444 A1

(12) EUROPEAN PATENT APPLICATION
published in accordance with Art. 153(4) EPC

(43) Date of publication:
01.07.2026 Bulletin 2026/27

(21) Application number: 24856436.1

(22) Date of filing: 20.08.2024

(51) International Patent Classification (IPC):
C02F 1/28 (2023.01)       B01D 39/16 (2006.01)
B01D 69/06 (2006.01)      B01D 69/12 (2006.01)
C02F 1/42 (2023.01)

(52) Cooperative Patent Classification (CPC):
B01D 39/16; B01D 69/06; B01D 69/12; C02F 1/28;
C02F 1/42

(86) International application number:
PCT/JP2024/029388

(87) International publication number:
WO 2025/041748 (27.02.2025 Gazette 2025/09)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.08.2023 JP 2023134826

(71) Applicant: Unitika Ltd.
Osaka-shi, Osaka 541-8566 (JP)

(72) Inventor: SAKAI, Maiko
Uji-shi, Kyoto 611-0021 (JP)

(74) Representative: Müller-Boré & Partner
Patentanwälte PartG mbB
Friedenheimer Brücke 21
80639 München (DE)

(54) WATER PURIFICATION FILTER

(57)     An object of the present invention is to provide a novel water purification filter including a soluble-component removal portion for reducing the content of a soluble component in water, the water purification filter being capable of effectively reducing the content of an insoluble component in water. The water purification filter of the present invention includes a cylindrical shaped body, the cylindrical shaped body including a soluble-component removal portion for reducing the content of a soluble component in water; and a sheet having through-holes for reducing the content of an insoluble component in water, wherein when the shaped body is viewed in a radial direction of the cylinder, the sheet is included inside the soluble-component removal portion.

FIG. 1

## Description

Technical Field

The present invention relates to a water purification filter.

Background Art

A water purification cartridge is known which contains activated carbon, an ion-removing member, and a hollow fiber membrane at different positions (for example, see Patent Literature 1). The activated carbon has pores, and mainly removes residual chlorine, volatile organic compounds, and the like dissolved in water. The ion-removing member, which may be formed of an ion-exchange resin or the like, removes metal ions such as lead ions dissolved in water. The hollow fiber membrane removes turbidity components such as iron rust, metal salts, and the like that are contained in water in an undissolved state.

A water purification filter, which is, for example, a water purification filter body integrally comprising fibers having a fiber average diameter of 20 $\mu$m or less, powdered activated carbon having a median diameter of 10 to 70 $\mu$m, and a fibrillated fiber binder, is known, wherein the proportion of the powdered activated carbon is 30 to 300 parts by weight, and the proportion of the fibrillated fiber binder is 10 to 40 parts by weight, relative to 100 parts by weight of the fibers (for example, see Patent Literature 2). It is described that the water purification filter body has an excellent ability to filter and collect various suspended matters in water including fine minerals of about 1 to 5 $\mu$m, has adsorption performance derived from the activated carbon, and is easy to handle.

Moreover, a water purification filter, which is a water treatment filter having a laminated structure of a meltblown nonwoven fabric and a porous body, is known, wherein the meltblown nonwoven fabric and the porous body are laminated so that water to be treated passes through the meltblown nonwoven fabric and then through the porous body, wherein the meltblown nonwoven fabric has a polystyrene particle-collecting efficiency of 90% or more when polystyrene particles having a particle diameter of 0.3 $\mu$m are passed through the meltblown nonwoven fabric at an air velocity of 1.5 m/min, wherein the meltblown nonwoven fabric has a thickness of 0.5 mm to 3.0 mm, and wherein the porous body is obtained by solidifying a mixture containing activated carbon and a resin (see, for example, Patent Literature 3). It is described that this tap water treatment filter can be provided as a water treatment filter that has excellent removal performance for contaminants (in particular, trihalomethanes) and turbidity components, and is less likely to be clogged with turbidity components.

Citation List

Patent Literature

Patent Literature 1: JP-A-2008-194596
Patent Literature 2: JP-A-2016-22399
Patent Literature 3: JP-A-2009-95731

Summary of Invention

Technical Problem

In a household where a lead pipe is used as a tap water pipe, lead exceeding the water quality standard may leach into tap water when tap water is not used for a long period of time. Thus, the pH of tap water is set on a slightly alkaline side to reduce lead leaching from the tap water pipe made of lead. However, when the pH of tap water is set on the alkaline side, lead ions contained in tap water may become insolubilized as a metal salt such as lead carbonate. Thus, water purifiers are increasingly required to reduce the content of insoluble components in water.

In order to reduce the content of insoluble components in water, it is often the case that, as in Patent Literature 1, a water purification filter containing activated carbon, an ion-exchange resin, and the like for reducing the content of soluble components in water and a hollow fiber membrane filter for reducing the content of insoluble components in water are disposed as separate filters in a water purification cartridge. However, such disposition of the water purification filter containing activated carbon, an ion-exchange resin, and the like for reducing the content of soluble components in water and the hollow fiber membrane filter for reducing the content of insoluble components in water as separate filters has a drawback in that the cartridge as a whole inevitably has a relatively large size.

On the other hand, Patent Literatures 2 and 3 are intended to impart the capability of reducing the content of insoluble components in water to a water purification filter itself containing activated carbon for reducing the content of soluble components in water. However, Patent Literature 2 is intended to provide the capability of reducing the content of insoluble components in water by adjusting the particle size distribution of powdered activated carbon, the fiber diameter of fibrous activated carbon, and the proportions of constituent components, and thus has a drawback in that, for example, the addition of a large proportion of the powdered activated carbon having a median diameter of 10 to 70 $\mu$m reduces the size of the water passage in a soluble-component removal portion to increase the pressure loss during filtration, thus limiting the degree of freedom in designing the soluble-component removal portion.

In Patent Literature 3, a meltblown nonwoven fabric for reducing the content of insoluble components in water is provided on an outer surface of a porous body containing activated carbon. Therefore, to ensure that the meltblown nonwoven fabric is provided on the outer surface of the porous body, it is required to bond the meltblown nonwoven fabric to the porous body. In this case, the bonding may cause blockage of the through-holes of the meltblown nonwoven fabric and the pores of the activated carbon.

Under such circumstances, it is an object of the present invention to provide a novel water purification filter comprising a soluble-component removal portion for reducing the content of a soluble component in water, the water purification filter being capable of effectively reducing the content of an insoluble component in water.

Solution to Problem

As a result of extensive research, the present inventor has found that the foregoing problem can be solved by a water purification filter comprising a cylindrical shaped body, the cylindrical shaped body comprising a soluble-component removal portion for reducing the content of a soluble component in water; and a sheet having through-holes for reducing the content of an insoluble component in water, wherein when the shaped body is viewed in a radial direction of the cylinder, the sheet is included inside the soluble-component removal portion. The present invention has been completed as a result of further extensive research based on this finding.

In summary, the present invention provides aspects of the invention as itemized below:

Item 1. A water purification filter comprising a cylindrical shaped body, the cylindrical shaped body comprising a soluble-component removal portion for reducing the content of a soluble component in water; and a sheet having through-holes for reducing the content of an insoluble component in water, wherein when the shaped body is viewed in a radial direction of the cylinder, the sheet is included inside the soluble-component removal portion.

Item 2. The water purification filter according to Item 1, wherein the sheet is a meltblown nonwoven fabric.

Item 3. The water purification filter according to Item 1 or 2, wherein the through-holes have an average pore diameter of 10 $\mu$m or less.

Item 4. The water purification filter according to any one of Items 1 to 3, wherein the soluble-component removal portion is shaped in a state where a nonwoven fabric containing a filter medium is wound, and the sheet is included inside the soluble-component removal portion in a state where the sheet is wound together with the nonwoven fabric containing the filter medium.

Advantageous Effects of Invention

In the water purification filter of the present invention, when the shaped body is viewed in the radial direction of the cylinder, the sheet is included inside the soluble-component removal portion, so that the water purification filter is capable of effectively reducing the content of an insoluble component in water.

Brief Description of Drawings

FIG. 1 is a schematic top view showing an example of the shaped body included in the water purification filter of the present invention.

FIG. 2 is a schematic cross-sectional view taken along line A-A of FIG. 1.

FIG. 3 is a schematic bottom view showing an example of the shaped body included in the water purification filter of the present invention.

FIG. 4 is a schematic plan view for explaining the method of manufacturing the shaped body illustrated in FIGS. 1 to 3.

Description of Embodiments

A water purification filter of the present invention comprises a cylindrical shaped body, the cylindrical shaped body comprising a soluble-component removal portion for reducing the content of a soluble component in water; and a sheet having through-holes for reducing the content of an insoluble component in water, wherein when the shaped body is viewed in a radial direction of the cylinder, the sheet is included inside the soluble-component removal portion.

One embodiment of the water purification filter according to the present invention will be described below with reference to the drawings; however, the form of the water purification filter according to the present invention is not limited to this embodiment.

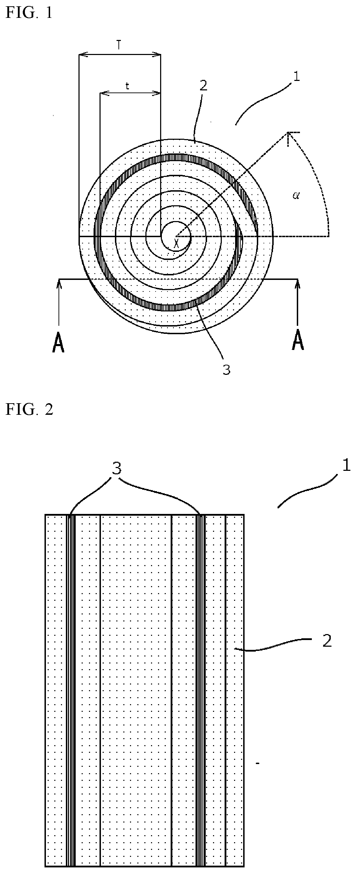

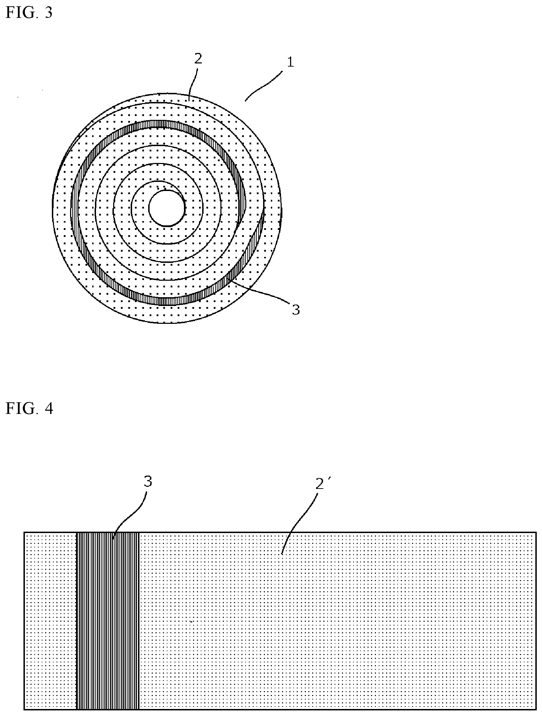

FIG. 1 is a schematic top view showing an example of the shaped body included in the water purification filter of the present invention; FIG. 2 is a schematic cross-sectional view taken along line A-A of FIG. 1; and FIG. 3 is a schematic bottom view showing an example of the shaped body included in the water purification filter of the present invention. As shown in FIGS. 1 to 3, a shaped body 1 constituting the water purification filter of the present invention is a cylindrical shaped body comprising a soluble-component removal portion 2 for reducing the content of a soluble component in water; and a sheet 3 having through-holes for reducing the content of an insoluble component in water. When the shaped body 1 is viewed in the radial direction of the cylinder, the sheet 3 is included (provided) inside the soluble-component removal portion 2. The inside of the cylinder of the shaped body 1 is hollow. As used hereinafter, an outer side surface of the cylinder of the shaped body 1 may be referred to as an outer surface, and an inner (hollow portion-side) side surface of the cylinder of the shaped body 1 may be referred to as an inner surface.

<Soluble-component removal portion>

In the shaped body 1 constituting the water purification filter of the present invention, the soluble-component removal portion 2 mainly serves to reduce the content of a soluble component in water.

As used herein, the soluble component is not specifically limited as long as it is a water-soluble component, and specific examples include free residual chlorine, chloroform, bromodichloromethane, dibromochloromethane, bromoform, tetrachloroethylene, trichloroethylene, total trihalomethanes, CAT, 2-MIB, soluble lead, 1,2-DCE, benzene, geosmin, anionic surfactants, phenols, PFOS, PFOA, soluble iron, and soluble manganese. One of these soluble components may be present alone in water, or two or more of them may be present in water. The size (such as molecular diameter) of the soluble component is not specifically limited, and is, for example, less than 0.1 $\mu$m.

In the shaped body 1 constituting the water purification filter of the present invention, the soluble-component removal portion 2 contains, as constituent material(s), a filter medium for reducing the content of a soluble component and optionally a material other than the filter medium.

A known material can be used as the filter medium. Specific examples include activated carbon, an ion-exchange resin, zeolite, calcium sulfite, and metal silicates such as titanium silicate and aluminum silicate. Of these, the activated carbon and ion-exchange resin are preferably used in combination.

Examples of the activated carbon include powdered activated carbon, granular activated carbon, and fibrous activated carbon. These activated carbons may be used alone or in combinations of two or more. It is preferred to use fibrous activated carbon when the shaped body 1 constituting the water purification filter of the present invention is a shaped body in which the soluble-component removal portion 2 is shaped by winding a drylaid or wetlaid nonwoven fabric containing the filter medium, as described later.

The specific surface area of the activated carbon is not specifically limited, and is, for example, 600 to 3000 $m^2$/g, preferably 1000 to 2500 $m^2$/g, and more preferably 1500 to 2000 $m^2$/g. The specific surface area of the activated carbon is calculated based on a nitrogen adsorption isotherm at 77K using a specific surface area measuring apparatus, and from the measurement point at a relative pressure of 0.1 using the BET method.

Examples of the ion-exchange resin include weakly acidic cation-exchange resins, strongly acidic cation-exchange resins, weakly basic anion-exchange resins, and strongly basic anion-exchange resins. These ion-exchange resins may be used alone or in combinations of two or more. The use of the ion-exchange resin can further enhance the removal performance for soluble lead. Of these, a weakly acidic cation-exchange resin is preferred, a weakly acidic cation-exchange resin having a carboxyl group is more preferred, a weakly acidic cation-exchange resin in which the hydrogen atom of the carboxyl group is substituted with an alkali metal and/or an alkaline earth metal is still more preferred, and a weakly acidic cation-exchange resin in which the hydrogen atom of the carboxyl group is substituted with sodium and/or calcium is particularly preferred. Moreover, the weakly acidic cation-exchange resin having a carboxyl group is preferably a polyacrylate- or polymethacrylate-based weakly acidic cation-exchange resin.

Examples of shapes of the ion-exchange resin include a powdered ion-exchange resin, a granular ion-exchange resin, and a fibrous ion-exchange resin (also referred to as ion-exchange fibers). These ion-exchange resins may be used alone or in combinations of two or more.

Examples of the optionally included material other than the filter medium include a heat-fusible resin and fibrillated fibers. These materials may be used alone or in combinations of two or more. The heat-fusible resin and fibrillated fibers serve to further enhance the formability of the soluble-component removal portion. As used herein, "heat-fusible resin" refers to a resin that exhibits fusing properties when heated. Also, as used herein, "fibrillated fibers" refers to fibers in which fibrils (small fibers) present inside the fibers are exposed on the fiber surface by the action of friction or the like, causing the fiber surface to become fluffed and frayed.

Examples of shapes of the heat-fusible resin include a powdered heat-fusible resin, a heat-fusible resin in powder form, and heat-fusible fibers. These heat-fusible resins may be used alone or in combinations of two or more. As used herein, "heat-fusible fibers" refers to fibers that exhibit fusing properties when heated.

Examples of the heat-fusible resin include olefin-based resins (for example, polyethylene, polypropylene, ethylene-vinyl acetate copolymer, ethylene-(meth)acrylic acid copolymer, and ethylene-(meth)acrylic acid ester copolymer); vinyl acetate-based resins (for example, polyvinyl acetate and vinyl acetate-vinyl chloride copolymer); polyvinyl alcohol-based resins (for example, polyvinyl alcohol and ethylene-vinyl alcohol copolymer); acrylic-based resins; styrene-based resins; low-melting-point polyester-based resins; polyamide-based resins; and thermoplastic polyurethane resins. These heat-fusible resins may be used alone or in combinations of two or more.

In the shaped body 1 constituting the water purification filter of the present invention, when the soluble-component removal portion 2 contains the heat-fusible resin, the heat-fusible resin preferably has a melting point (or a softening point when the heat-fusible resin does not exhibit a melting point; the same applies hereinafter) that is lower than the melting point of the below-described sheet 3 having through-holes for reducing the content of an insoluble component in water. The melting point of the heat-fusible resin is preferably 150°C or less, more preferably 140°C or less, and still more preferably 130°C or less. As used herein, "melting point" is defined as the temperature that gives a maximum value in a melting endothermic curve measured at a heating rate of 20°C/min, using a differential scanning calorimeter (for example, DSC7 from PerkinElmer, Inc.).

The heat-fusible fibers are preferably heat-fusible fibers formed of two or more polymer components having different melting points or softening points in view of easy heat treatment, for example, and more preferably core-sheath heat-fusible fibers having a core-sheath structure in which a high-melting-point polymer is the core portion and a low-melting-point polymer (heat-fusible resin) is the sheath portion. Examples of the core-sheath heat-fusible fibers include polyolefin-based fibers in which the core portion is polypropylene and the sheath portion is modified polyethylene; fibers in which the core portion is polyethylene terephthalate and the sheath portion is a polyolefin; and polyester-based fibers in which the core portion is polyethylene terephthalate and the sheath portion is a low-melting-point (low-softening-point) polyester. Examples of the low-melting-point polyester include copolymerized polyethylene terephthalate copolymerized with a copolymerization component such as isophthalic acid. These heat-fusible fibers may be used alone or in combinations of two or more. The polymer of the core portion preferably has a melting point higher than the melting point of the polymer of the sheath portion by 20°C or more, and more preferably 30°C or more. The melting point of the polymer of the core portion is specifically 150 to 300°C, preferably 200 to 300°C, and is higher than the melting point of the polymer of the sheath portion by 20°C or more, preferably 30°C or more, more preferably 50°C or more, and still more preferably 100°C or more.

Examples of the fibrillated fibers include acrylic fibers, acrylic-based fibers, polyethylene fibers, cellulose fibers, and aramid fibers. The fibrillated fibers have a freeness of, for example, 1 to 300, preferably 10 to 200, as measured according to JIS P 8121-2:2012.

The soluble-component removal portion 2 preferably contains the heat-fusible fibers as the material other than the filter medium, and preferably contains the core-sheath heat-fusible fibers.

The form of the soluble-component removal portion 2 is not specifically limited as long as it is a cylindrical shape, and examples include a shaped body in which a nonwoven fabric containing the filter medium is shaped in a wound state, as illustrated in FIG. 1.

In the shaped body in which a nonwoven fabric containing the filter medium is shaped in a wound state, examples of the nonwoven fabric include drylaid or wetlaid nonwoven fabrics. Examples of the drylaid nonwoven fabrics include a nonwoven fabric made of a short-fiber structure obtained by the airlaid or carding method (carded web method); and a needle-punched nonwoven fabric obtained by needle-punching the nonwoven fabric to integrally laminate the nonwoven fabric. Examples of the wetlaid nonwoven fabrics include a nonwoven fabric produced by wetlaid paper-making, which is obtained by mixing and shearing a solution containing the filter medium using a device such as a pulper, a beater, or a refiner to prepare a uniformly dispersed slurry, and passing the resulting slurry on the wire, followed by dehydration and drying.

Referring to FIGS. 1 to 4, an example of the shaped body in which the nonwoven fabric containing the filter medium is shaped in a wound state is described in detail. FIG. 4 is a schematic plan view for explaining the method of manufacturing the shaped body illustrated in FIGS. 1 to 3. In the manufacture of the shaped body illustrated in FIGS. 1 to 3, first, as shown in FIG. 4, a nonwoven fabric 2' containing the filter medium, which is a member for forming the soluble-component removal portion 2, is provided. Then, as shown in FIG. 4, the below-described sheet 3 having through-holes for reducing the content of an insoluble component in water is placed on the nonwoven fabric 2' containing the filter medium so as to have a predetermined length and position. Then, the nonwoven fabric 2' containing the filter medium, with the sheet 3 placed thereon, is wound under tension around a thin winding core made of iron, for example, while the sheet 3 is also being wrapped inside. The resulting form is fixed by heat treatment or the like, the winding core is removed, and the shaped body 1 is optionally cut in a plane direction perpendicular to the height direction to achieve a predetermined height. This results in the shaped body 1 in which the nonwoven fabric 2' containing the filter medium is shaped in a wound state, as shown in FIGS. 1 to 3. In the resulting shaped body 1, the long-side ends of the nonwoven fabric 2' containing the filter medium are spirally arranged to form upper and lower surfaces of the shaped body. Moreover, in the resulting shaped body 1, the ends on the sides of the sheet 3 substantially parallel to the long sides of the nonwoven fabric 2' containing the filter medium are exposed on the upper and lower surfaces of the shaped body. Furthermore, surfaces of the nonwoven fabric 2' containing the filter medium and the sheet 3 are wound so that they are substantially parallel to the side surface of the shaped body 1. As a result, as shown in FIGS. 1 to 3, when the shaped body 1 is viewed in the radial direction of the cylinder, the sheet 3 is included inside the soluble-component removal portion 2. Moreover, the nonwoven fabric 2' containing the filter medium, with the sheet 3 placed thereon, is wound under tension while the sheet 3 is also being wrapped inside, so that the shaped body 1 can be compressed in a direction radially from the outer surface toward the center, which allows the density of the shaped body 1 to be adjusted, and allows the sheet 3 to be fixed by the nonwoven fabric 2' containing the filter medium.

In the shaped body 1 constituting the water purification filter of the present invention, the nonwoven fabric 2' containing the filter medium, which is a member for forming the soluble-component removal portion 2, may have a thickness of, for example, 0.1 to 1.5 mm, preferably 0.3 to 1.0 mm, although not specifically limited thereto. The nonwoven fabric 2' containing the filter medium may have a basis weight of, for example, 30 to 200 g/m$^2$, preferably 50 to 120 g/m$^2$, although not specifically limited thereto. As used herein, the thickness of the nonwoven fabric 2' containing the filter medium is determined by measuring thicknesses at 10 arbitrary points through observation in the direction of a cross section of the thickness of the nonwoven fabric 2' using a microscope, and defining the average value of these thicknesses at the 10 points as the thickness of the nonwoven fabric 2'. Moreover, as used herein, the basis weight of the nonwoven fabric 2' containing the filter medium is the value measured in accordance with Method A of JIS L 1096:2010 8.3.2.

<Sheet 3 having through-holes for reducing the content of an insoluble component in water>

In the shaped body 1 constituting the water purification filter of the present invention, the sheet 3 having through-holes for reducing the content of an insoluble component in water mainly functions to reduce the content of an insoluble component in water.

As used herein, the insoluble component specifically includes one or more selected from the group consisting of turbidity components, fine-particulate iron (including iron compounds such as iron salts), aluminum (neutral), and fine-particulate lead (including lead compounds such as lead salts). Examples of the iron compounds include $Fe_2O_3$. Examples of the aluminum include aluminum compounds such as $Al(OH)_3$. Examples of the lead compounds include $2PbCO_3 \cdot Pb(OH)_2$. The insoluble component may have a size with, for example, a particle diameter of 0.1 μm or more, more specifically 0.1 to 2000 μm.

Examples of the sheet 3 include a flat sheet membrane-shaped porous separation membrane such as an MF membrane, a woven fabric, and a nonwoven fabric.

Examples of the material constituting the porous separation membrane include fluororesins such as PVDF and PTFE; polyolefin-based resins such as polyethylene; cellulose esters such as cellulose acetate, cellulose acetate propionate, and cellulose acetate butyrate; and polysulfone-based resins such as polysulfone and polyethersulfone.

Examples of the fiber material constituting the woven fabric include polyester-based resins, polyamide-based resins, polyolefin-based resins, polyacrylic-based resins, cellulose-based resins, and natural fibers.

Examples of the material constituting the nonwoven fabric include polyolefin-based resins such as polypropylene, polyester-based resins, polystyrenes, polyurethane-based resins, polyamide-based resins, and polycarbonate-based resins. The nonwoven fabric is preferably in the form of a meltblown nonwoven fabric in view of its thin fibers and small pore size between the fibers, and more preferably a meltblown nonwoven fabric containing polypropylene fibers.

The sheet 3 is preferably a meltblown nonwoven fabric, and more preferably a meltblown nonwoven fabric containing polypropylene fibers, in view of achieving both the function of reducing the content of an insoluble component in water, and a lower pressure loss.

The sheet 3 has a melting point of, for example, more than 140°C, preferably more than 150°C, and more preferably 155°C or more.

The sheet 3 included in the shaped body 1 constituting the water purification filter of the present invention has through-holes. The through-holes include holes through which the water to be purified passes and that trap the insoluble component in the water.

The through-holes have an average pore diameter of, for example, 20 μm or less, preferably 10 μm or less, and more preferably 1 to 10 μm. As used herein, the average pore diameter of the sheet 3 is measured as follows. That is, it is measured in accordance with the "Bubble Point Method" of ASTM F316-86. Specifically, the average pore diameter of the sheet 3 is calculated using a capillary flow porometer, based on the following equation (I) from the air pressure (P) measured, the surface tension ($\gamma$) of a standard liquid, and the contact angle ($\theta$) with a substrate.

$$\text{Average pore diameter} = 4\gamma\cos\theta/P \ldots \text{(I)}$$

The sheet 3 may have a basis weight of, for example, 10 to 150 g/m², preferably 30 to 120 g/m², and more preferably 40 to 80 g/m², although not specifically limited thereto. As used herein, the basis weight of the sheet 3 is the value measured in accordance with ISO 3801:1977 6.7.

The sheet 3 may have a thickness of, for example, 50 to 300 $\mu$m, preferably 100 to 250 $\mu$m, and more preferably 120 to 200 $\mu$m. As used herein, the thickness of the sheet 3 is determined by measuring thicknesses at four arbitrary points using a micrometer, and defining the average value of these thicknesses as the thickness of the sheet 3.

In the shaped body 1 constituting the water purification filter of the present invention, the sheet 3 is included inside the soluble-component removal portion 2 when viewed in the radial direction of the cylinder. That is, when the shaped body 1 is viewed in the radial direction of the cylinder, the sheet 3 is included inside the soluble-component removal portion 2 so that, as viewed from the sheet 3, the soluble-component removal portion 2 is present on the inner surface side and the outer surface side of the shaped body 1 constituting the water purification filter. In the embodiment illustrated in FIGS. 1 to 3, the sheet 3 is included without being exposed on the outer surface and the inner surface of the shaped body. In the shaped body 1 constituting the water purification filter of the present invention, as illustrated in FIGS. 1 to 3, the sheet 3 may be included in a wound state together with the nonwoven fabric 2' containing the filter medium described above. In FIGS. 1 to 3, surfaces of the nonwoven fabric 2' containing the filter medium and the sheet 3 are wound so that they are substantially parallel to the side surface of the shaped body. Moreover, in FIGS. 1 to 3, the ends on the sides of the sheet 3 substantially parallel to the long sides of the nonwoven fabric 2' containing the filter medium are exposed on the upper and lower surfaces of the shaped body.

The number of the sheets 3 in the shaped body 1 constituting the water purification filter may be one as illustrated in FIGS. 1 to 3, or may be more than one. A plurality of the sheets 3 may be arranged either by placing them on each other in the radial direction, or by spacing them from each other with the soluble-component removal portion 2 therebetween in the radial direction. Alternatively, a plurality of the sheets 3 may be arranged at different positions in the height direction of the shaped body.

In the shaped body 1, the position of the sheet 3 when viewed in the radial direction of the cylinder is not specifically limited. From the viewpoint of achieving both the function of reducing the content of an insoluble component in water, and a lower pressure loss, the center position in the thickness direction of the sheet 3 when the shaped body 1 is viewed in the radial direction of the cylinder is preferably located closer to the inner surface side than the center position of the thickness of the shaped body 1. From the same viewpoint, referring to FIG. 1, in a transverse cross section perpendicular to the height direction at an arbitrary height of the shaped body 1, when the thickness of the shaped body 1 is assumed to be T and the distance from the inner surface to an arbitrary point in the thickness direction of the shaped body 1 is assumed to be t, the center position in the thickness direction of the sheet 3 is preferably present in a region where t/T is 0.005 or more and 0.49 or less, and more preferably 0.005 or more and 0.3 or less.

Referring to FIG. 1, when a straight line corresponding to an arbitrary radius is imaginarily drawn from the center X of the cylinder in a transverse cross section perpendicular to the height direction at an arbitrary height of the shaped body 1, and the straight line is rotated by 360° in the circumferential direction around the center X as a starting point, the ratio of the angle $\alpha$° at which the sheet 3 is present (= $\alpha$°/360°) may be, for example, 0.8 to 1.0, preferably 0.9 to 1.0, and more preferably 1.0, although not specifically limited thereto.

In the shaped body 1 constituting the water purification filter of the present invention, the shaped body 1 illustrated in FIG. 1 has the sheet 3 wound once therearound, with a partial overlap portion of the sheet 3 in the radial direction. The number of windings of the sheet 3 is not specifically limited, but is, for example, 1.0 times or more, preferably 1.0 to 5.0 times, more preferably 1.5 to 3.0 times, and still more preferably 2.0 to 3.0 times. The number of the windings is calculated from the angle. For example, when the sheet 3 is wound 1080°, 1080°/360° = 3.0 windings.

In the example shown in FIGS. 1 to 3, the ends on the sides of the sheet 3 substantially parallel to the long sides of the nonwoven fabric 2' containing the filter medium are exposed on the upper and lower surfaces of the shaped body 1. In the shaped body 1 constituting the water purification filter of the present invention, the ends on the sides of the sheet 3 substantially parallel to the long sides of the nonwoven fabric 2' containing the filter medium are preferably exposed on the upper and lower surfaces of the shaped body 1, but are not necessarily exposed on the upper and lower surfaces, and may be included without being exposed in the height direction. Furthermore, in the example shown in FIGS. 1 to 3, the sheet 3 is included in a continuous manner in the height direction of the shaped body 1. In the water purification filter of the present invention, the sheet 3 is preferably included in a continuous manner in the height direction of the shaped body 1, but is not necessarily included in a continuous manner in the height direction of the shaped body 1; for example, as described above, a plurality of the sheets 3 may be arranged at different positions in the height direction of the shaped body 1.

The ratio of the mass of the sheet 3 to the total mass of the sheet 3 and the soluble-component removal portion 2 (mass of sheet 3/(mass of sheet 3 + mass of soluble-component removal portion 2) $\times$ 100) included in the shaped body 1 constituting the water purification filter of the present invention is not specifically limited, but may be, for example, 0.2 to 10% by mass, and is preferably 0.5 to 5% by mass in view of achieving both the function of reducing the content of an insoluble component in water, and a lower pressure loss.

<Other members that the water purification filter of the present invention may optionally include>

The water purification filter of the present invention may optionally include members other than the shaped body 1 including the soluble-component removal portion 2 and the sheet 3. Examples of the other members include cap(s) bonded to the upper surface and/or the lower surface of the shaped body 1, a cylindrical core provided on the inner surface of the shaped body 1, and a cover layer provided on the outer surface of the shaped body 1.

A known cap may be used as the cap, and examples include caps that can withstand long-term passage of water and caps having chemical resistance and heat resistance, which are made of stainless steel, rubber, resin, or the like.

A known core may be used as the core, and examples include a cylindrical core shaped by winding a fabric such as a nonwoven fabric, a woven fabric, a knitted fabric, or a felt into a roll shape; and a cylindrical core formed of a resin, a metal, or a ceramic and having through-holes in the radial direction. Of these, a core formed by winding a nonwoven fabric into a roll shape is preferred. The nonwoven fabric is not specifically limited, but may be, for example, a nonwoven fabric containing the heat-fusible fibers described above that can be contained in the soluble-component removal portion 2, and may be preferably a nonwoven fabric containing heat-fusible short fibers. Particularly preferred is a nonwoven fabric in which heat-fusible short fibers are randomly arranged three-dimensionally, and the fibers are entangled with each other and heat-fused. Examples of the nonwoven fabric include drylaid nonwoven fabrics, with needle-punched nonwoven fabrics being preferred. The heat-fusible resin for forming the heat-fusible short fibers preferably has a melting point of 80 to 140°C. Examples of the heat-fusible resin include polyethylene resins; and polyester-based resins such as copolymerized polyethylene terephthalate copolymerized with a copolymerization component such as isophthalic acid. Of these, the heat-fusible resin is preferably a polyester-based resin in view of its relatively high hydrophilicity and superior water compatibility, and more preferably polyethylene terephthalate copolymerized with isophthalic acid. Examples of the heat-fusible short fibers include total melting-type heat-fusible short fibers composed of a single heat-fusible resin alone; and core-sheath heat-fusible short fibers in which a heat-fusible resin is disposed as the sheath portion and a synthetic resin component having a melting point higher than that of the sheath portion by preferably 20°C or more, more preferably 30°C or more is disposed as the core portion. Of these, the core-sheath heat-fusible short fibers are preferred in view of further increasing the strength of the water purification filter. Examples of the core portion component of the core-sheath heat-fusible short fibers include, but are not specifically limited to, a synthetic resin component having a melting point of 150 to 300°C, more preferably 200 to 300°C, which is higher than the melting point of the sheath portion by 20°C or more. A specific example of the synthetic resin component is polyethylene terephthalate.

Examples of the cover layer include, but are not specifically limited to, fabrics such as woven fabrics, knitted fabrics, and nonwoven fabrics, with nonwoven fabrics being preferred. Examples of the nonwoven fabrics include those containing the heat-fusible resin described above, with nonwoven fabrics containing the heat-fusible fibers described above being preferred. Examples of forms of the nonwoven fabrics include a spunbond nonwoven fabric. Examples of the long fibers or continuous fibers constituting the spunbond nonwoven fabric include core-sheath heat-fusible fibers in which a heat-fusible component is disposed as the sheath portion, and a synthetic resin component having a melting point higher than the melting point of the heat-fusible component of the sheath portion by preferably 20°C or more, more preferably 30°C or more is disposed as the core portion. Examples of the core portion component of the core-sheath heat-fusible fibers include a synthetic resin component having a melting point of 150 to 300°C, more preferably 200 to 300°C, which is higher than the melting point of the heat-fusible component of the sheath portion by 20°C or more, and more specifically, polyethylene terephthalate. Examples of the heat-fusible component of the sheath portion of the core-sheath heat-fusible fibers include those having a melting point of preferably 80 to 170°C, more preferably 80 to 140°C, and more specifically, olefin-based resins such as polypropylene and polyethylene, and polyester-based resins such as copolymerized polyethylene terephthalate copolymerized with a copolymerization component such as isophthalic acid. Of these, polyolefin-based resins are preferred, and polyethylene is more preferred, in view of their superior flexibility and heat fusibility to an activated carbon shaped body, as well as superior handleability and processability.

<Physical properties and the like of the water purification filter>

(Preferable performance for reducing the content of an insoluble component in water)

The water purification filter of the present invention comprises a cylindrical shaped body, the cylindrical shaped body comprising a soluble-component removal portion for reducing the content of a soluble component in water; and a sheet having through-holes for reducing the content of an insoluble component in water, wherein when the shaped body is viewed in a radial direction of the cylinder, the sheet is included inside the soluble-component removal portion, so that the water purification filter is capable of effectively reducing the content of an insoluble component in water. The removal performance for the insoluble component in water of the water purification filter of the present invention is such that the rejection ratio for basic lead carbonate as measured by the following measurement method is preferably 96% or more, more preferably 97% or more, and still more preferably 98% or more, both at the time of passage of 75 L of water and at the time of passage of 150 L of water.

(Measurement method)

Sodium hydroxide and calcium carbonate are added to pure water to adjust the pH to 8.5 ± 0.25 and the hardness to 100 to 300 ppm. Basic lead carbonate ($2PbCO_3 \cdot Pb(OH)_2$) is added thereto, and the resulting mixture is classified and prepared so that the total lead concentration is 50 ± 10 ppb, and the ratio of the concentration of soluble lead of 0.1 $\mu$m or less relative to the total lead concentration is 30 ± 10%, to obtain raw water. The pH is measured by a pH meter (for example, pH meter PH71 from YOKOGAWA), the hardness is measured by a hardness meter (for example, HI96735 from HANNA), and the total lead concentration is measured by a lead sensor (for example, a portable lead analyzer from Kemio). The concentration of soluble lead of 0.1 $\mu$m or less is defined as the lead concentration measured by the above-mentioned lead sensor in the filtrate obtained by filtering the resulting raw water through a 0.1 $\mu$m syringe filter. The classification can be performed using known methods such as natural sedimentation. Then, caps made of foamed polyethylene are bonded to both end surfaces of the water purification filter using a silicone sealant to provide sealing. The water purification filter is then loaded into a stainless steel housing. The raw water is passed from the outside to the inside at a superficial velocity of 2200/h. The filtrate is collected at the time of passage of 75 L of water and at the time of passage of 150 L of water, and the total lead concentration in the filtrate is measured. Then, the rejection ratio for basic lead carbonate at the time of passage of 75 L of water and at the time of passage of 150 L of water is calculated based on the following equation (II):

rejection ratio (%) for basic lead carbonate = [(total lead concentration in the raw water - total lead concentration in the filtrate)/total lead concentration in the raw water] × 100  (II)

(Preferable water permeation performance)

The water permeation performance of the water purification filter of the present invention is such that the pressure loss as measured by the following measurement method is preferably 0.07 MPa or less, more preferably 0.05 MPa or less, and still more preferably 0.04 or less, at the initial stage, as well as at the time of passage of 75 L of water and at the time of passage of 150 L of water.

(Measurement method)

Sodium hydroxide and calcium carbonate are added to pure water to adjust the pH to 8.5 ± 0.25 and the hardness to 100 to 300 ppm. Basic lead carbonate ($2PbCO_3 \cdot Pb(OH)_2$) is added thereto, and the resulting mixture is classified and prepared so that the total lead concentration is 50 ± 10 ppb, and the ratio of the concentration of soluble lead of 0.1 $\mu$m or less relative to the total lead concentration is 30 ± 10% by mass, to obtain raw water. The pH is measured by a pH meter (for example, pH meter PH71 from YOKOGAWA), the hardness is measured by a hardness meter (for example, HI96735 from HANNA), and the total lead concentration is measured by a lead sensor (for example, a portable lead analyzer from Kemio). The concentration of soluble lead of 0.1 $\mu$m or less is defined as the lead concentration measured by the above-mentioned lead sensor in the filtrate obtained by filtering the resulting raw water through a 0.1 $\mu$m syringe filter. The classification can be performed using known methods such as natural sedimentation. Then, caps made of foamed polyethylene are bonded to both end surfaces of the water purification filter using a silicone sealant to provide sealing. The water purification filter is then loaded into a stainless steel housing. The raw water is passed from the outside to the inside at a superficial velocity of 2200/h. A pressure loss X1 (MPa) is measured by a Bourdon tube pressure gauge at the initial stage of water passage, as well as at the time of passage of 75 L of water and at the time of passage of 150 L of water. Moreover, a pressure loss X2 (MPa) for a blank from which the water purification filter has been previously removed is measured in the same manner. A value obtained by subtracting the pressure loss X2 from the pressure loss X1 is defined as the pressure loss (MPa) during water passage in the water purification filter.

The height (length from the upper surface to the lower surface) of the water purification filter of the present invention may be appropriately set according to the type of water purifier to be used, and is, for example, 10 to 300 mm, and preferably 10 to 100 mm. In the water purification filter of the present invention, the shaped body 1 has a height of, for example, 10 to 300 mm, preferably 10 to 100 mm.

The thickness (radial thickness) of the water purification filter of the present invention may be appropriately set according to the type of water purifier to be used and the like. In view of the water purification performance and water permeability, the thickness is, for example, 1 to 50 mm, and preferably 1.5 to 30 mm. In the water purification filter of the present invention, the shaped body 1 has a thickness of, for example, 1 to 50 mm, preferably 1.5 to 30 mm. As used herein, the thickness of the cylindrical water purification filter and shaped body 1 is the value obtained by subtracting the inner diameter from the outer diameter. The inner diameter is defined as, in a cross section perpendicular to the height direction of the water purification filter and shaped body 1, the diameter of the space communicating from the center of one bottom surface to the center of the other bottom surface. The outer diameter is defined as, in a cross section perpendicular to the height direction of the water purification filter and the shaped body 1, the diameter of the water purification filter and shaped body 1 including the space. When the water purification filter of the present invention has a cylindrical shape, the inner diameter and the outer diameter of the water purification filter and shaped body 1 may be appropriately set so as to satisfy the thicknesses described above, and specifically, the inner diameter may be 5 mm or more, and the outer diameter may be 15 to 150 mm. The water purification filter of the present invention may have a volume of, for example, 1 to 500 cm$^3$, preferably 10 to 300 cm$^3$, although not specifically limited thereto. In the water purification filter of the present invention, the shaped body 1 may have a volume of, for example, 1 to 500 cm$^3$, preferably 10 to 300 cm$^3$, although not specifically limited thereto.

Examples

The present invention will be hereinafter described in detail with reference to examples and a comparative example; however, the present invention is not limited to the examples.

1. Provision of the filter medium constituting the soluble-component removal portion for reducing the content of a soluble component in water

The following materials were provided as the filter medium constituting the soluble-component removal portion for reducing the content of a soluble component in water.

- Fibrous activated carbon (from AD'ALL Co., Ltd., trade name: A-15, specific surface area 1700 m$^2$/g)
- Ion-exchange fibers (from UNITIKA LTD., trade name: A-02CA, polyacrylate-based weakly acidic cation-exchange fibers (Ca-substituted polyacrylate-based ion-exchange fibers))

2. Provision of the material other than the filter medium, constituting the soluble-component removal portion for reducing the content of a soluble component in water

The following material was provided as the material other than the filter medium, constituting the soluble-component removal portion for reducing the content of a soluble component in water.

- Core-sheath heat-fusible short fibers (from UNITIKA LTD., trade name: MELTY 4080, core-sheath heat-fusible short fibers in which the core portion is PET and the sheath portion is copolymerized polyethylene terephthalate having a melting point of 110°C)

3. Provision of the nonwoven fabric 2' containing the filter medium, constituting the soluble-component removal portion 2

27 parts by mass of the fibrous activated carbon, 58 parts by mass of the ion-exchange fibers, and 15 parts by mass of the core-sheath heat-fusible short fibers, i.e., a total of 100 parts by mass, were mixed and then carded to form a thin web. The web was needle-punched, heat-treated at an atmospheric temperature of 90°C, and cooled to obtain a nonwoven fabric 2' containing the filter medium as a needle-punched nonwoven fabric. The nonwoven fabric had a basis weight of 70 g/m$^2$ and a thickness of 0.5 mm. The resulting nonwoven fabric 2' containing the filter medium was a nonwoven fabric having a length of 1000 mm in the TD direction and continuous in the MD direction.

4. Provision of the sheet 3

The following materials were provided as the sheet 3.

- Meltblown nonwoven fabric A (from SWM, trade name: Delpore DP3918-80P, average pore diameter: 1.2 μm, basis weight: 80 g/m$^2$, thickness: 165 μm, constituent material: polypropylene fibers, melting point: 160°C, nonwoven fabric continuous in the MD direction)

- Meltblown nonwoven fabric B (from SWM, trade name: Delpore DP3120-5.0, average pore diameter: 8.0 μm, basis weight: 48 g/m², thickness: 165 μm, constituent material: polypropylene fibers, melting point: 160°C, nonwoven fabric continuous in the MD direction)

5. Provision of a nonwoven fabric as the core

First, heat-fusible short fibers were provided in which polyethylene terephthalate copolymerized with isophthalic acid, serving as a heat-fusible component, was disposed as the sheath portion, and polyethylene terephthalate was disposed as the core portion. In the heat-fusible short fibers, the melting point of the sheath portion was 110°C, the melting point of the core portion was 260°C, the fiber length was 51 mm, the fiber diameter was 12 μm, and the fineness was 2.2 dtex. The short fibers were carded to form a thin web, and the web was needle-punched, heat-treated at a temperature of 175°C, and cooled to obtain a nonwoven fabric containing the heat-fusible short fibers in which the short fibers were randomly arranged three-dimensionally, and the fibers were entangled with each other and heat-fused. The nonwoven fabric containing the heat-fusible short fibers was to be provided on an inner peripheral side surface in the radial direction of the activated carbon shaped body. The nonwoven fabric had a basis weight of 50 g/m². The resulting nonwoven fabric was a nonwoven fabric having a length of 500 mm in the TD direction and continuous in the MD direction.

6. Provision of a nonwoven fabric as the cover layer

A spunbond nonwoven fabric (from UNITIKA LTD., trade name: ELEVES (registered trademark) S0303WTO, a spunbond nonwoven fabric made of continuous fibers, which are core-sheath composite fibers having a core portion made of a polyester-based resin and a sheath portion made of a polyolefin-based resin, in which the deposited continuous fibers are integrated by partial compression bonding by thermal embossing; basis weight of the nonwoven fabric: 30 g/m², thickness: 0.23 mm) was provided as the nonwoven fabric for forming the cover layer. The provided spunbond nonwoven fabric was a nonwoven fabric having a length of 500 mm in the TD direction and continuous in the MD direction.

<Example 1>

A cylindrical pipe made of iron with an outer diameter of 18.3 mm and an axial length of 1200 mm was used as the core. The nonwoven fabric provided as the core was cut to give a length of 250 mm in the MD direction. Then, the cut nonwoven fabric as the core was wound around the cylindrical pipe in the MD direction under tension. Next, the nonwoven fabric 2' containing the filter medium as the soluble-component removal portion 2 was wound in the MD direction on the wound nonwoven fabric as the core about one and a half times (1.5 windings) in the MD direction, under tension so that it was placed exactly on the nonwoven fabric as the core in the TD direction. In this state, the meltblown nonwoven fabric A as the sheet 3 cut to 150 mm in the TD direction and 1000 mm in the MD direction was placed on the nonwoven fabric 2' containing the filter medium that was about to be continuously wound, so that the MD direction of the meltblown nonwoven fabric A was placed exactly on the TD direction of the nonwoven fabric 2' containing the filter medium. Then, the nonwoven fabric 2' containing the filter medium, with the meltblown nonwoven fabric A placed thereon, continued to be wound under tension in the MD direction of the nonwoven fabric 2' containing the filter medium, while the meltblown nonwoven fabric A was being wrapped inside. In this state, the nonwoven fabric 2' containing the filter medium continued to be wound under tension in the MD direction to achieve a predetermined thickness of the shaped body 1. A roll A obtained by winding the nonwoven fabric as the core, the nonwoven fabric 2' containing the filter medium, and the meltblown nonwoven fabric A around the cylindrical pipe was placed in a furnace, heat-treated at an atmospheric temperature of 150°C for 1 hour, and cooled. On the outer surface of the cooled roll A, the nonwoven fabric provided as the cover layer was wound once (1.0 winding) in the MD direction so that it was placed exactly on the nonwoven fabric 2' containing the filter medium in the TD direction, to produce a roll A'. The resulting roll A' was placed in the furnace again and heat-treated at an atmospheric temperature of 150°C for 20 minutes. Thereafter, the roll A' was cooled, the cylindrical pipe was removed, and the roll was cut by a cutting machine to give a height of 34.5 mm in the height direction to obtain a water purification filter of the present invention. The physical properties and the like of the resulting water purification filter are shown in Table 1.

As illustrated in FIGS. 1 to 3, the resulting water purification filter included the shaped body in which the nonwoven fabric 2' containing the filter medium was shaped in a wound state, wherein when the shaped body was viewed in the radial direction of the cylinder, the sheet 3 was included inside the soluble-component removal portion 2 without being exposed to the outer surface and the inner surface of the shaped body 1, so that, as viewed from the sheet 3, the soluble-component removal portion 2 was present on the inner surface side and the outer surface side of the shaped body. Furthermore, in the shaped body 1, the long-side ends of the nonwoven fabric 2' containing the filter medium were spirally arranged to form the upper surface and the lower surface of the shaped body 1, and the ends on the sides of the sheet 3 substantially parallel to the long sides of the nonwoven fabric 2' containing the filter medium were exposed on the upper surface and the lower surface of the shaped body 1.

Furthermore, in the resulting water purification filter, the position of the sheet 3 when viewed in the radial direction of the cylinder was such that the center position in the thickness direction of the sheet 3 in the shaped body 1 was located closer to the inner surface side than the center of the thickness of the shaped body 1. Specifically, in a transverse cross section perpendicular to the height direction of the shaped body 1, when the thickness of the shaped body 1 is assumed to be T and the distance from the inner surface to an arbitrary point in the thickness direction of the shaped body 1 is assumed to be t, the center position in the thickness direction of the sheet 3 was present only in a region where t/T was 0.005 or more and 0.3 or less. The number of windings of the sheet 3 was 2.4.

<Example 2>

A cylindrical pipe made of iron with an outer diameter of 18.3 mm and an axial length of 1200 mm was used as the core. The nonwoven fabric provided as the core was cut to give a length of 250 mm in the MD direction. Then, the cut nonwoven fabric as the core was wound around the cylindrical pipe in the MD direction under tension. Next, the nonwoven fabric 2' containing the filter medium as the soluble-component removal portion 2 was wound in the MD direction on the wound nonwoven fabric as the core about one and a half times (1.5 windings) in the MD direction, under tension so that it was placed exactly on the nonwoven fabric as the core in the TD direction. In this state, the meltblown nonwoven fabric B as the sheet 3 cut to 150 mm in the TD direction and 1000 mm in the MD direction was placed on the nonwoven fabric 2' containing the filter medium that was about to be continuously wound, so that the MD direction of the meltblown nonwoven fabric B was placed exactly on the TD direction of the nonwoven fabric 2' containing the filter medium. Then, the nonwoven fabric 2' containing the filter medium, with the meltblown nonwoven fabric B placed thereon, continued to be wound under tension in the MD direction of the nonwoven fabric 2' containing the filter medium, while the meltblown nonwoven fabric B was being wrapped inside. In this state, the nonwoven fabric 2' containing the filter medium continued to be wound under tension in the MD direction to achieve a predetermined thickness of the shaped body 1. A roll B obtained by winding the nonwoven fabric as the core, the nonwoven fabric 2' containing the filter medium, and the meltblown nonwoven fabric B around the cylindrical pipe was placed in a furnace, heat-treated at an atmospheric temperature of 150°C for 1 hour, and cooled. On the outer surface of the cooled roll B, the nonwoven fabric provided as the cover layer was wound once (1.0 winding) in the MD direction so that it was placed exactly on the nonwoven fabric 2' containing the filter medium in the TD direction, to produce a roll B'. The resulting roll B' was placed in the furnace again and heat-treated at an atmospheric temperature of 150°C for 20 minutes. Thereafter, the roll B' was cooled, the cylindrical pipe was removed, and the roll was cut by a cutting machine to give a height of 34.5 mm in the height direction to obtain a water purification filter of the present invention. The physical properties and the like of the resulting water purification filter are shown in Table 1.

As illustrated in FIGS. 1 to 3, the resulting water purification filter included the shaped body in which the nonwoven fabric 2' containing the filter medium was shaped in a wound state, wherein when the shaped body was viewed in the radial direction of the cylinder, the sheet 3 was included inside the soluble-component removal portion 2 without being exposed to the outer surface and the inner surface of the shaped body 1, so that, as viewed from the sheet 3, the soluble-component removal portion 2 was present on the inner surface side and the outer surface side of the shaped body. Furthermore, in the shaped body 1, the long-side ends of the nonwoven fabric 2' containing the filter medium were spirally arranged to form the upper surface and the lower surface of the shaped body 1, and the ends on the sides of the sheet 3 substantially parallel to the long sides of the nonwoven fabric 2' containing the filter medium were exposed on the upper surface and the lower surface of the shaped body 1.

Furthermore, in the resulting water purification filter, the position of the sheet 3 when viewed in the radial direction of the cylinder was such that the center position in the thickness direction of the sheet 3 in the shaped body 1 was located closer to the inner surface side than the center of the thickness of the shaped body 1. Specifically, in a transverse cross section perpendicular to the height direction of the shaped body 1, when the thickness of the shaped body 1 is assumed to be T and the distance from the inner surface to an arbitrary point in the thickness direction of the shaped body 1 is assumed to be t, the center position in the thickness direction of the sheet 3 was present only in a region where t/T was 0.005 or more and 0.3 or less. The number of windings of the sheet 3 was 2.4.

<Example 3>

A cylindrical pipe made of iron with an outer diameter of 18.3 mm and an axial length of 1200 mm was used as the core. The nonwoven fabric provided as the core was cut to give a length of 250 mm in the MD direction. Then, the cut nonwoven fabric as the core was wound around the cylindrical pipe in the MD direction under tension. Next, the nonwoven fabric 2' containing the filter medium as the soluble-component removal portion 2 was wound in the MD direction on the wound nonwoven fabric as the core about one and a half times (1.5 windings) in the MD direction, under tension so that it was placed exactly on the nonwoven fabric as the core in the TD direction. In this state, the meltblown nonwoven fabric B as the sheet 3 cut to 110 mm in the TD direction and 1000 mm in the MD direction was placed on the nonwoven fabric 2' containing the filter medium that was about to be continuously wound, so that the MD direction of the meltblown nonwoven fabric B was placed exactly on the TD direction of the nonwoven fabric 2' containing the filter medium. Then, the nonwoven fabric 2' containing the filter medium, with the meltblown nonwoven fabric B placed thereon, continued to be wound under tension in the MD direction of the nonwoven fabric 2' containing the filter medium, while the meltblown nonwoven fabric B was being wrapped inside. In this state, the nonwoven fabric 2' containing the filter medium continued to be wound under tension in the MD direction to achieve a predetermined thickness of the shaped body 1. A roll C obtained by winding the nonwoven fabric as the core, the nonwoven fabric 2' containing the filter medium, and the meltblown nonwoven fabric B around the cylindrical pipe was placed in a furnace, heat-treated at an atmospheric temperature of 150°C for 1 hour, and cooled. On the outer surface of the cooled roll C, the nonwoven fabric provided as the cover layer was wound once (1.0 winding) in the MD direction so that it was placed exactly on the nonwoven fabric 2' containing the filter medium in the TD direction, to produce a roll C'. The resulting roll C' was placed in the furnace again and heat-treated at an atmospheric temperature of 150°C for 20 minutes. Thereafter, the roll C' was cooled, the cylindrical pipe was removed, and the roll was cut by a cutting machine to give a height of 34.5 mm in the height direction to obtain a water purification filter of the present invention. The physical properties and the like of the resulting water purification filter are shown in Table 1.

As illustrated in FIGS. 1 to 3, the resulting water purification filter included the shaped body in which the nonwoven fabric 2' containing the filter medium was shaped in a wound state, wherein when the shaped body was viewed in the radial direction of the cylinder, the sheet 3 was included inside the soluble-component removal portion 2 without being exposed to the outer surface and the inner surface of the shaped body 1, so that, as viewed from the sheet 3, the soluble-component removal portion 2 was present on the inner surface side and the outer surface side of the shaped body. Furthermore, in the shaped body 1, the long-side ends of the nonwoven fabric 2' containing the filter medium were spirally arranged to form the upper surface and the lower surface of the shaped body 1, and the ends on the sides of the sheet 3 substantially parallel to the long sides of the nonwoven fabric 2' containing the filter medium were exposed on the upper surface and the lower surface of the shaped body 1.

Furthermore, in the resulting water purification filter, the position of the sheet 3 when viewed in the radial direction of the cylinder was such that the center position in the thickness direction of the sheet 3 in the shaped body 1 was located closer to the inner surface side than the center of the thickness of the shaped body 1. Specifically, in a transverse cross section perpendicular to the height direction of the shaped body 1, when the thickness of the shaped body 1 is assumed to be T and the distance from the inner surface to an arbitrary point in the thickness direction of the shaped body 1 is assumed to be t, the center position in the thickness direction of the sheet 3 was present only in a region where t/T was 0.005 or more and 0.3 or less. The number of windings of the sheet 3 was 1.7.

<Example 4>

A cylindrical pipe made of iron with an outer diameter of 18.3 mm and an axial length of 1200 mm was used as the core. The nonwoven fabric provided as the core was cut to give a length of 250 mm in the MD direction. Then, the cut nonwoven fabric as the core was wound around the cylindrical pipe in the MD direction under tension. Next, the nonwoven fabric 2' containing the filter medium as the soluble-component removal portion 2 was wound in the MD direction on the wound nonwoven fabric as the core to a length such that the thickness of the shaped body 1 would become 17 mm in the MD direction, under tension so that it was placed exactly on the nonwoven fabric as the core in the TD direction. In this state, the meltblown nonwoven fabric A as the sheet 3 cut to 240 mm in the TD direction and 1000 mm in the MD direction was placed on the nonwoven fabric 2' containing the filter medium that was about to be continuously wound, so that the MD direction of the meltblown nonwoven fabric A was placed exactly on the TD direction of the nonwoven fabric 2' containing the filter medium. Then, the nonwoven fabric 2' containing the filter medium, with the meltblown nonwoven fabric A placed thereon, continued to be wound under tension in the MD direction of the nonwoven fabric 2' containing the filter medium, while the meltblown nonwoven fabric A was being wrapped inside. In this state, the nonwoven fabric 2' containing the filter medium continued to be wound under tension in the MD direction to achieve a predetermined thickness of the shaped body 1. A roll D obtained by winding the nonwoven fabric as the core, the nonwoven fabric 2' containing the filter medium, and the meltblown nonwoven fabric A around the cylindrical pipe was placed in a furnace, heat-treated at an atmospheric temperature of 150°C for 1 hour, and cooled. On the outer surface of the cooled roll D, the nonwoven fabric provided as the cover layer was wound once (1.0 winding) in the MD direction so that it was placed exactly on the nonwoven fabric 2' containing the filter medium in the TD direction, to produce a roll D'. The resulting roll D' was placed in the furnace again and heat-treated at an atmospheric temperature of 150°C for 20 minutes. Thereafter, the roll D' was cooled, the cylindrical pipe was removed, and the roll was cut by a cutting machine to give a height of 34.5 mm in the height direction to obtain a water purification filter of the present invention. The physical properties and the like of the resulting water purification filter are shown in Table 1.

As illustrated in FIGS. 1 to 3, the resulting water purification filter included the shaped body in which the nonwoven fabric 2' containing the filter medium was shaped in a wound state, wherein when the shaped body was viewed in the radial direction of the cylinder, the sheet 3 was included inside the soluble-component removal portion 2 without being exposed to the outer surface and the inner surface of the shaped body 1, so that, as viewed from the sheet 3, the soluble-component removal portion 2 was present on the inner surface side and the outer surface side of the shaped body. Furthermore, in the shaped body 1, the long-side ends of the nonwoven fabric 2' containing the filter medium were spirally arranged to form the upper surface and the lower surface of the shaped body 1, and the ends on the sides of the sheet 3 substantially parallel to the long sides of the nonwoven fabric 2' containing the filter medium were exposed on the upper surface and the lower surface of the shaped body 1.

Furthermore, in the resulting water purification filter, the position of the sheet 3 when viewed in the radial direction of the cylinder was such that the center position in the thickness direction of the sheet 3 in the shaped body 1 was located closer to the inner surface side than the center of the thickness of the shaped body 1. Specifically, in a transverse cross section perpendicular to the height direction of the shaped body 1, when the thickness of the shaped body 1 is assumed to be T and the distance from the inner surface to an arbitrary point in the thickness direction of the shaped body 1 is assumed to be t, the center position in the thickness direction of the sheet 3 was present only in a region where $t/T$ was 0.80 or more and 0.98 or less. The number of windings of the sheet 3 was 1.3.

<Comparative Example 1>

A cylindrical pipe made of iron with an outer diameter of 18.3 mm and an axial length of 1200 mm was used as the core. The nonwoven fabric provided as the core was cut to give a length of 250 mm in the MD direction. Then, the cut nonwoven fabric as the core was wound around the cylindrical pipe in the MD direction under tension. Next, the nonwoven fabric 2' containing the filter medium as the soluble-component removal portion 2 was wound in the MD direction on the wound nonwoven fabric as the core, so that it was placed exactly on the nonwoven fabric as the core in the TD direction, under tension so as to achieve a predetermined thickness of the shaped body 1. A roll E obtained by winding the nonwoven fabric as the core and the nonwoven fabric 2' containing the filter medium around the cylindrical pipe was placed in a furnace, heat-treated at an atmospheric temperature of 150°C for 1 hour, and cooled. On the outer surface of the cooled roll E, the nonwoven fabric provided as the cover layer was wound once (1.0 winding) in the MD direction so that it was placed exactly on the nonwoven fabric 2' containing the filter medium in the TD direction, to produce a roll E'. The resulting roll E' was placed in the furnace again and heat-treated at an atmospheric temperature of 150°C for 20 minutes. Thereafter, the roll E' was cooled, the cylindrical pipe was removed, and the roll was cut by a cutting machine to give a height of 34.5 mm in the height direction to obtain a water purification filter of the comparative example. The physical properties and the like of the resulting water purification filter are shown in Table 1.

<Evaluation methods>

1. Specific surface area ($m^2/g$) of activated carbon

The specific surface area of the activated carbon was calculated based on a nitrogen adsorption isotherm at 77K using "AUTOSORB-1-MP" from Quantachrome, and from the measurement point at a relative pressure of 0.1 using the BET method.

2. Thickness ($\mu$m) of each of the nonwoven fabric 2' containing the filter medium, the nonwoven fabric as the core, and the nonwoven fabric as the cover layer

The thickness of each of the nonwoven fabric 2' containing the filter medium, the nonwoven fabric as the core, and the nonwoven fabric as the cover layer was determined using VHX-5000 from Keyence Corporation as a microscope, by measuring thicknesses at 10 arbitrary points through observation in the direction of a cross section of the thickness of each member, and adopting the average value of the thicknesses at the 10 points.

3. Thickness ($\mu$m) of the sheet 3

The thickness of the sheet 3 was determined using the ProGage Thickness Instrument (from Thwing-Albert), by measuring thicknesses at four arbitrary points and adopting the average value.

4. Basis weight ($g/m^2$) of each of the nonwoven fabric 2' containing the filter medium, the nonwoven fabric as the core, and the nonwoven fabric as the cover layer

The basis weight of each of the nonwoven fabric 2' containing the filter medium, the nonwoven fabric as the core, and the nonwoven fabric as the cover layer was measured in accordance with Method A of JIS L 1096:2010 8.3.2.

5. Basis weight (g/m$^2$) of the sheet 3

The basis weight of the sheet 3 was measured in accordance with ISO 3801:1977 6.7.

6. Average pore diameter ($\mu$m) of the sheet 3

The average pore diameter of the sheet 3 was measured by the method in accordance with the "Bubble Point Method" of ASTM F316-86. Specifically, the average pore diameter was calculated using the Capillary Flow Porometer APP 1200 AEX (from Porous Materials, Inc.), based on the following equation (I) from the air pressure (P) measured, the surface tension ($\gamma$) of GALWICK (from Porous Materials, Inc.) as the standard liquid, and the contact angle ($\theta$) with a substrate.

$$\text{Average pore diameter} = 4\gamma\cos\theta/P \ \dots \ (I)$$

7. Rejection ratio (%) for basic lead carbonate

Sodium hydroxide (from Nacalai Tesque, Inc.) and calcium carbonate (from Nacalai Tesque, Inc.) were added to pure water to adjust the pH to 8.5 $\pm$ 0.25 and the hardness to 100 to 300 ppm. Basic lead carbonate (2PbCO$_3 \bullet$Pb(OH)$_2$ from Kanto Chemical Co., Inc.) was added thereto, and the resulting mixture was classified and prepared so that the total lead concentration was 50 $\pm$ 10 ppb, and the ratio of the concentration of soluble lead of 0.1 $\mu$m or less relative to the total lead concentration was 30 $\pm$ 10% by mass, to obtain raw water. The pH was measured by a pH meter (pH meter PH71 from YOKOGAWA), the hardness was measured by a hardness meter (HI96735 from HANNA), and the total lead concentration was measured by a lead sensor (a portable lead analyzer from Kemio). The concentration of soluble lead of 0.1 $\mu$m or less was defined as the lead concentration measured by the above-mentioned lead sensor in the filtrate obtained by filtering the resulting raw water through a 0.1 $\mu$m syringe filter (PALL Acrodisc Supor 0.1 $\mu$m). The total lead concentration in the raw water is shown in Table 1. Then, caps made of foamed polyethylene were bonded to both end surfaces of the water purification filter using a silicone sealant to provide sealing. The water purification filter was then loaded into a stainless steel housing. The raw water was passed from the outside to the inside at a superficial velocity of 2200/h. The filtrate was collected at the time of passage of 75 L of water and at the time of passage of 150 L of water, and the total lead concentration in the filtrate was measured. Then, the rejection ratio for basic lead carbonate at the time of passage of 75 L of water and at the time of passage of 150 L of water was calculated based on the following equation (II):

rejection ratio (%) for basic lead carbonate = [(total lead concentration in the raw water - total lead concentration in the filtrate)/total lead concentration in the raw water] $\times$ 100     (II)

8. Pressure loss (MPa)

The raw water provided in the measurement of "7. Rejection ratio (%) for basic lead carbonate" above was used as the raw water for measuring the pressure loss. Then, caps made of foamed polyethylene were bonded to both end surfaces of the water purification filter using a silicone sealant to provide sealing. The water purification filter was then loaded into a stainless steel housing. The raw water was passed from the outside to the inside at a superficial velocity of 2200/h. A pressure loss X1 (MPa) was measured by a Bourdon tube pressure gauge at the initial stage of water passage, as well as at the time of passage of 75 L of water and at the time of passage of 150 L of water. Moreover, a pressure loss X2 (MPa) for a blank from which the water purification filter had been previously removed was measured in the same manner. A value obtained by subtracting the pressure loss X2 from the pressure loss X1 was defined as the pressure loss (MPa) during water passage in the water purification filter.

The physical properties and the like of the water purification filters of Examples 1 to 4 and Comparative Example 1 are shown in Table 1.

[Table 1]

| | | | | Ex. 1 | Ex. 2 | Ex. 3 | Ex. 4 | Comp. Ex. 1 |
|---|---|---|---|---|---|---|---|---|
| Soluble-component removal portion 2 | Constituent materials (mass ratio) | | Fibrous activated carbon | 27 | 27 | 27 | 27 | 27 |
| | | | Ion-exchange fibers | 58 | 58 | 58 | 58 | 58 |
| | | | Heat-fusible fibers | 15 | 15 | 15 | 15 | 15 |
| | | | Total | 100 | 100 | 100 | 100 | 100 |
| | Basis weight (g/m$^2$) of nonwoven fabric 2' containing filter medium | | | 70 | 70 | 70 | 70 | 70 |
| | Thickness (mm) of nonwoven fabric 2' containing filter material' | | | 0.5 | 0.5 | 0.5 | 0.5 | 0.5 |
| Sheet 3 | Type | | | Meltblown nonwoven fabric A | Meltblown nonwoven fabric B | Meltblown nonwoven fabric B | Meltblown nonwoven fabric A | |
| | Average pore diameter ($\mu$m) | | | 1.2 | 8.0 | 8.0 | 1.2 | |
| | Basis weight (g/m$^2$) | | | 80 | 48 | 48 | 80 | |
| | Thickness ($\mu$m) | | | 165 | 165 | 165 | 165 | |
| | Number of windings of sheet 3 | | | 2.4 | 2.4 | 1.7 | 1.3 | |
| | Winding length of sheet 3 | | | 150 | 150 | 110 | 240 | |
| Shaped body 1 | Inner diameter (mm) | | | 20.3 | 20.3 | 20.3 | 20.3 | 20.3 |
| | Outer diameter (mm) | | | 57.94 | 57.94 | 57.94 | 57.94 | 57.94 |
| | Thickness (mm) | | | 18.82 | 18.82 | 18.82 | 18.82 | 18.82 |
| Core | Constituent material | | | Needle-punched nonwoven fabric made of heat-fusible short fibers | Needle-punched nonwoven fabric made of heat-fusible short fibers | Needle-punched nonwoven fabric made of heat-fusible short fibers | Needle-punched nonwoven fabric made of heat-fusible short fibers | Needle-punched nonwoven fabric made of heat-fusible short fibers |
| | Inner diameter (mm) | | | 18.3 | 18.3 | 18.3 | 18.3 | 18.3 |
| | Outer diameter (mm) | | | 20.3 | 20.3 | 20.3 | 20.3 | 20.3 |
| | Thickness (mm) | | | 1.0 | 1.0 | 1.0 | 1.0 | 1.0 |
| Cover layer | Constituent material | | | Spunbond nonwoven fabric | Spunbond nonwoven fabric | Spunbond nonwoven fabric | Spunbond nonwoven fabric | Spunbond nonwoven fabric |
| | Thickness (mm) | | | 0.23 | 0.23 | 0.23 | 0.23 | 0.23 |
| | Basis weight (g/m$^2$) | | | 30 | 30 | 30 | 30 | 30 |

(continued)

|  |  |  | Ex. 1 | Ex. 2 | Ex. 3 | Ex. 4 | Comp. Ex. 1 |
|---|---|---|---|---|---|---|---|
| Water purification filter | | Inner diameter (mm) | 18.3 | 18.3 | 18.3 | 18.3 | 18.3 |
| | | Outer diameter (mm) | 58.4 | 58.4 | 58.4 | 58.4 | 58.4 |
| | | Thickness (mm) | 20.05 | 20.05 | 20.05 | 20.05 | 20.05 |
| | | [Mass of sheet 3/(mass of soluble-component removal portion 2 + mass of sheet 3)] × 100 (% by mass) | 2.5 | 1.5 | 1.1 | 3.9 | |
| | Test of removal performance for basic lead carbonate | Total lead concentration (ppb) in raw water | 49.0 | 57.0 | 57.0 | 49.0 | 49.0 |
| | | Total lead concentration (ppb) in filtrate at the time of passage of 75L of water | 0.8 | 0.8 | 1.0 | 0.8 | 2.9 |
| | | Total Lead Concentration (ppb) in filtrate at the time of passage of 150 L of water | 1.1 | 0.8 | 0.8 | 0.8 | 1.3 |
| | | Rejection ratio (%) at the time of passage of 75 L of water | 98 | 99 | 98 | 98 | 94 |
| | | Rejection ratio (%) at the time of passage of 150 L of water | 98 | 99 | 99 | 98 | 97 |
| | Pressure loss (Mpa) | Initial stage | 0.045 | 0.041 | 0.035 | 0.048 | 0.005 |
| | | At the time of passage of 75 L of water | 0.043 | 0.040 | 0.027 | 0.055 | 0.006 |
| | | At the time of passage of 150 L of water | 0.043 | 0.039 | 0.029 | 0.056 | 0.006 |

The water purification filters of Examples 1 to 4 each included a cylindrical shaped body, the cylindrical shaped body including a soluble-component removal portion for reducing the content of a soluble component in water; and a sheet having through-holes for reducing the content of an insoluble component in water, wherein when the shaped body was viewed in a radial direction of the cylinder, the sheet was included inside the soluble-component removal portion, so that the water purification filter was capable of effectively reducing the content of an insoluble component in water.

In contrast, in the water purification filter of Comparative Example 1, when the shaped body was viewed in the radial direction of the cylinder, the sheet having through-holes for reducing the content of an insoluble component in water was not included inside the soluble-component removal portion, so that the water purification filter was less capable of reducing the content of an insoluble component in water.

Reference Signs List

1    Shaped body
2    Soluble-component removal portion
2'   Nonwoven fabric containing filter medium
3    Sheet

**Claims**

1.  A water purification filter comprising a cylindrical shaped body, the cylindrical shaped body comprising a soluble-component removal portion for reducing the content of a soluble component in water; and a sheet having through-holes for reducing the content of an insoluble component in water,
    wherein when the shaped body is viewed in a radial direction of the cylinder, the sheet is included inside the soluble-component removal portion.

2.  The water purification filter according to claim 1, wherein the sheet is a meltblown nonwoven fabric.

3.  The water purification filter according to claim 1, wherein the through-holes have an average pore diameter of 10 μm or less.

4.  The water purification filter according to any one of claims 1 to 3, wherein the soluble-component removal portion is shaped in a state where a nonwoven fabric containing a filter medium is wound, and the sheet is included inside the soluble-component removal portion in a state where the sheet is wound together with the nonwoven fabric containing the filter medium.

FIG. 1

FIG. 2

FIG. 3

FIG. 4

## INTERNATIONAL SEARCH REPORT

| International application No. |
| --- |
| **PCT/JP2024/029388** |

| A. | CLASSIFICATION OF SUBJECT MATTER |
| --- | --- |

*C02F 1/28*(2023.01)i; *B01D 39/16*(2006.01)i; *B01D 69/06*(2006.01)i; *B01D 69/12*(2006.01)i; *C02F 1/42*(2023.01)i
FI:   C02F1/28 G; B01D39/16 A; B01D39/16 D; B01D69/06; B01D69/12; C02F1/42 A

According to International Patent Classification (IPC) or to both national classification and IPC

| B. | FIELDS SEARCHED |
| --- | --- |

Minimum documentation searched (classification system followed by classification symbols)

C02F1/28, B01D39/00 - 41/04, B01D53/22, B01D61/00 - 71/82, C02F1/44, C02F1/42

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2014-094337 A (OSAWA, Shinjiro) 22 May 2014 (2014-05-22) | 1, 3-4 |
| | claims, paragraphs [0021], [0023] | |
| A | | 2 |
| X | JP 2003-103255 A (KURITA WATER IND LTD., KURITAKKU KK) 08 April 2003 (2003-04-08) | 1, 3-4 |
| | claims, paragraphs [0002], [0031]-[0032], examples | |
| Y | | 2 |
| Y | JP 2002-346321 A (MINEBEA CO., LTD.) 03 December 2002 (2002-12-03) | 2 |
| | paragraph [0002] | |
| A | | 1, 3-4 |
| Y | JP 2016-175074 A (DAIWABO HOLDINGS CO., LTD., DAIWABO PROGRESS CO., LTD.) 06 October 2016 (2016-10-06) | 2 |
| | paragraphs [0021]-[0025] | |
| A | | 1, 3-4 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **26 September 2024** | **08 October 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| International application No. |
| --- |
| **PCT/JP2024/029388** |

### C. DOCUMENTS CONSIDERED TO BE RELEVANT

| Category* | Citation of document, with indication, where appropriate, of the relevant passages | Relevant to claim No. |
| --- | --- | --- |
| A | JP 2016-159255 A (TOCLAS CORP.) 05 September 2016 (2016-09-05)<br>entire text | 1-4 |
| A | JP 2004-290847 A (TORAY INDUSTRIES, INC.) 21 October 2004 (2004-10-21)<br>entire text | 1-4 |
| A | JP 2022-023531 A (UNITIKA LTD.) 08 February 2022 (2022-02-08)<br>entire text | 1-4 |
| A | JP 2003-126846 A (KITZ CORPORATION) 07 May 2003 (2003-05-07)<br>entire text | 1-4 |
| A | JP 11-047732 A (LIFE TEC SUPPLY KK) 23 February 1999 (1999-02-23)<br>entire text | 1-4 |
| A | JP 2002-119959 A (KAWAMOTO PUMP MFG CO., LTD.) 23 April 2002 (2002-04-23)<br>entire text | 1-4 |
| A | JP 2002-263639 A (MITSUBISHI RAYON CO., LTD.) 17 September 2002 (2002-09-17)<br>entire text | 1-4 |
| A | US 2022/0220018 A1 (LG ELECTRONICS INC.) 14 July 2022 (2022-07-14)<br>whole document | 1-4 |

## INTERNATIONAL SEARCH REPORT
### Information on patent family members

International application No.

**PCT/JP2024/029388**

| Patent document cited in search report | | | Publication date (day/month/year) | Patent family member(s) | Publication date (day/month/year) |
|---|---|---|---|---|---|
| JP | 2014-094337 | A | 22 May 2014 | (Family: none) | |
| JP | 2003-103255 | A | 08 April 2003 | (Family: none) | |
| JP | 2002-346321 | A | 03 December 2002 | US 2002/0175118 A1 paragraph [0003] | |
| JP | 2016-175074 | A | 06 October 2016 | JP 2020-157297 A paragraphs [0021]-[0025] | |
| JP | 2016-159255 | A | 05 September 2016 | (Family: none) | |
| JP | 2004-290847 | A | 21 October 2004 | (Family: none) | |
| JP | 2022-023531 | A | 08 February 2022 | (Family: none) | |
| JP | 2003-126846 | A | 07 May 2003 | (Family: none) | |
| JP | 11-047732 | A | 23 February 1999 | (Family: none) | |
| JP | 2002-119959 | A | 23 April 2002 | (Family: none) | |
| JP | 2002-263639 | A | 17 September 2002 | (Family: none) | |
| US | 2022/0220018 | A1 | 14 July 2022 | KR 10-2022-0102309 A whole document CN 114763279 A whole document | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008194596 A
- JP 2016022399 A

- JP 2009095731 A